# EUROPÄISCHE PATENTSCHRIFT

(11) **EP 1 852 379 B1**
(45) Veröffentlichungstag und Bekanntmachung des Hinweises auf die Patenterteilung: **23.07.2014**
(21) Anmeldenummer: 07002915.2
(22) Anmeldetag: 12.02.2007
(51) Int. Cl.: B65H 33/08

(54) **Drehhubtisch**
Rotating lifting table
Table élévatrice rotative

(30) Priorität: 05.05.2006 CH 7272006
(43) Veröffentlichungstag der Anmeldung: 07.11.2007
(73) Patentinhaber: Ferag AG, 8340 Hinwil (CH)
(72) Erfinder: Heuberger, Werner, 8344 Bäretswil (CH)
(74) Vertreter: Schaad, Balass, Menzl & Partner AG

(56) Entgegenhaltungen:
- US-A- 4 068 567
- US-A1- 2004 140 607

## Beschreibung

Die vorliegende Erfindung betrifft einen Drehhubtisch gemäss dem Oberbegriff des Anspruchs 1 und eine Vorrichtung zum Bilden von Stapeln aus flächigen Gegenständen, insbesondere von Druckereiprodukten, gemäss Anspruch 10.

Drehhubtische zur Verarbeitung von flächigen Gegenständen, insbesondere von Druckereiprodukten, wie bedruckten Blättern, Zeitungen, Zeitschriften usw., sind allgemein bekannt. Sie sind mit einer dreh- und / oder heb- und senkbaren Drehhubtischplatte ausgestattet, auf bzw. oberhalb derer die flächigen Gegenstände zu liegen kommen. Drehhubtische weisen in der Regel zugeordnete Ausstossmitteln auf, mittels denen die auf der Drehhubtischplatte liegenden flächigen Gegenstände in einer gewählten Ausstossrichtung hinausgeschoben werden können.

Die Drehbarkeit der Drehhubtischplatte ist insbesondere bei der Bildung von Stapeln aus gefalteten Druckereiprodukten von Vorteil. So werden zur Erhöhung der Stabilität derartiger Stapel jeweils um 180° bezüglich einer rechtwinklig zur Drehhubtischplatte orientierten Drehachse gegeneinander gedrehte Teilstapel alternierend übereinander geschichtet. Auf diese Weise gelangen jeweils abwechselnd falzseitige dickere Bereiche und dünnere Bereiche der freien Seitenkanten von Druckereiprodukten aufeinanderfolgender Teilstapel übereinander zu liegen, so dass Höhenunterschiede der einzelnen Teilstapel aufgrund ihrer bereichsweise unterschiedlichen Dicken ausgeglichen werden.

Die Drehhubtischplatte ist darüber hinaus vorzugsweise heb- und senkbar ausgeführt, um beispielsweise gezielt Fallhöhen für Druckereiprodukte oder aus ihnen gebildeter Teilstapel zu verringern oder um zur Komprimierung von Stapeln diese gegen oberhalb der Drehhubtischplatte angeordnete Presselemente drücken zu können.

Die Ausbildung sowohl der Drehbarkeit wie auch der Heb- und Senkbarkeit der Drehhubtischplatte ist nicht in jedem Fall zwingend erforderlich. Vielmehr kann der im Folgenden beschriebene und beanspruchte Drehhubtisch auch bei einer eingeschränkten Funktionalität, also bei einer Nutzung als Drehtisch, Hubtisch oder auch nur als Stapeltisch, völlig analog eingesetzt werden.

Ein Drehtisch zum Stapeln von Druckereiprodukten ist beispielsweise in der US 4,068,567 beschrieben. Auf einem hydro-pneumatisch drehbaren Fuss ist dabei eine Drehtischplatte angeordnet, die an zwei sich gegenüberliegenden Seiten mit Ausstossvorrichtungen, die Ausstossmitteln zum Ausstossen der in Stapeln angeordneten Druckereiprodukte aufweisen, ausgestattet ist. Eine die Druckereiprodukte verdrängende Bewegung der Ausstossmittel über die Drehtischplatte hinweg definiert dabei eine Ausstossrichtung. Die Drehtischplatte ist rinnenartig bzw. V-förmig nach unten gewölbt. Beidseitig von einer parallel zur Ausstossrichtung verlaufenden unteren Kantenlinie sind ebene Auflageflächenelemente, auf denen ein unteres Druckereiprodukt zu liegen kommt, ausgebildet. Die auf der Drehtischplatte liegenden Druckereiprodukte passen sich aufgrund ihrer flächenartigen Ausbildung und ihres Eigengewichts der konkaven Wölbung der Drehtischplatte an.

Insbesondere bei grossformatigen und sehr dünnen Druckereiprodukten ergibt sich das Problem, dass die Formstabilität von Stapeln aus derartigen Druckereiprodukten beim Ausstossen derart gering ist, dass es zu unerwünschten Formveränderungen des Stapels und zu Verletzungen der Druckereiprodukte kommen kann.

Daher besteht die Aufgabe der vorliegenden Erfindung darin, die Formstabilität von Stapeln aus flächigen Gegenständen bei deren Bildung bzw. ihrem Abtransport von einem Drehhubtisch weiter zu erhöhen.

Diese Aufgabe wird durch einen Drehhubtisch gemäss dem Anspruch 1 und eine Vorrichtung zum Bilden von Stapeln aus flächigen Gegenständen gemäss dem Anspruch 10 gelöst. Besonders bevorzugte Ausführungsformen sind mit den in den abhängigen Ansprüchen aufgeführten Merkmalen ausgestattet.

Der erfindungsgemässe Drehhubtisch ist mit einer Drehhubtischplatte zur Auflage von flächigen Gegenständen, insbesondere Druckereiprodukten ausgestattet, die eine konvex nach oben gewölbte Auflagefläche aufweist. Die Auflagefläche wird durch Auflageflächenelemente gebildet und ist mit einem Firstbereich ausgestattet, dessen Längsausdehnung wenigstens nahezu rechtwinklig zu einer Ausstossrichtung, in welcher die flächigen Gegenstände von der Drehhubtischplatte abtransportiert werden können, verläuft. Dieser Firstbereich wird folglich als Querfirstbereich bezeichnet.

Auf bzw. oberhalb der Drehhubtischplatte zur Auflage gelangende flächige Gegenstände passen sich im Wesentlichen der konvexen Querauswölbung der Drehhubtischplatte bzw. bereits darauf liegender flächiger Gegenstände an und erfahren dabei eine entsprechende Profilierung. Diese Profilierung der flächigen Gegenstände bewirkt eine erhöhte Formstabilität des auf der Drehhubtischplatte liegenden Stapels, was insbesondere beim Drehen der Drehhubtischplatte und beim Ausstossen des Stapels von Vorteil ist, da auf diese Weise die Gefahr eines Verrutschens oder Umfallens des Stapels und damit eine etwaige Verletzung der flächigen Gegenstände vermindert wird. Darüber hinaus dient die konvex gewölbte Auflagefläche insbesondere bei mit einem Falz versehenen flächigen Gegenständen einer verbesserten Zentrierung der flächigen Gegenstände in ihrer Stapelanordnung.

Im Folgenden wird anhand einer Zeichnung eine besonders bevorzugte Ausführungsform eines erfindungsgemässen Drehhubtisches bzw. einer erfindungsgemässen Vorrichtung zum Bilden von Stapeln detailliert beschrieben. Die Figuren zeigen rein schematisch im Einzelnen:

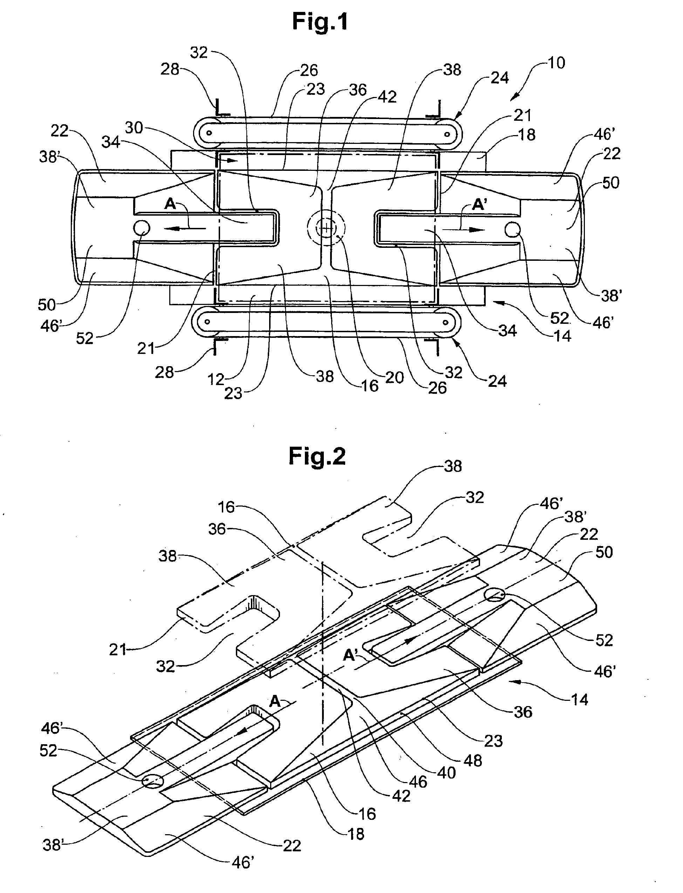

- Fig. 1: in Draufsicht eine Vorrichtung zum Bilden von Stapeln aus flächigen Gegenständen mit einem Drehhubtisch, der eine walmdachförmig, konvex nach oben gewölbte Drehhubtischplatte aufweist, der zwei Hilfstische zugeordnet sind;
- Fig. 2: in einer perspektivischen Darstellung die in Fig. 1 gezeigte Drehhubtischplatte in einer unteren Grundposition (durchgezogene Linien), in welcher sie im Eingriff mit den zugeordneten Hilfstischen steht, und in einer erhöhten Hubposition (strichpunktierte Linien);

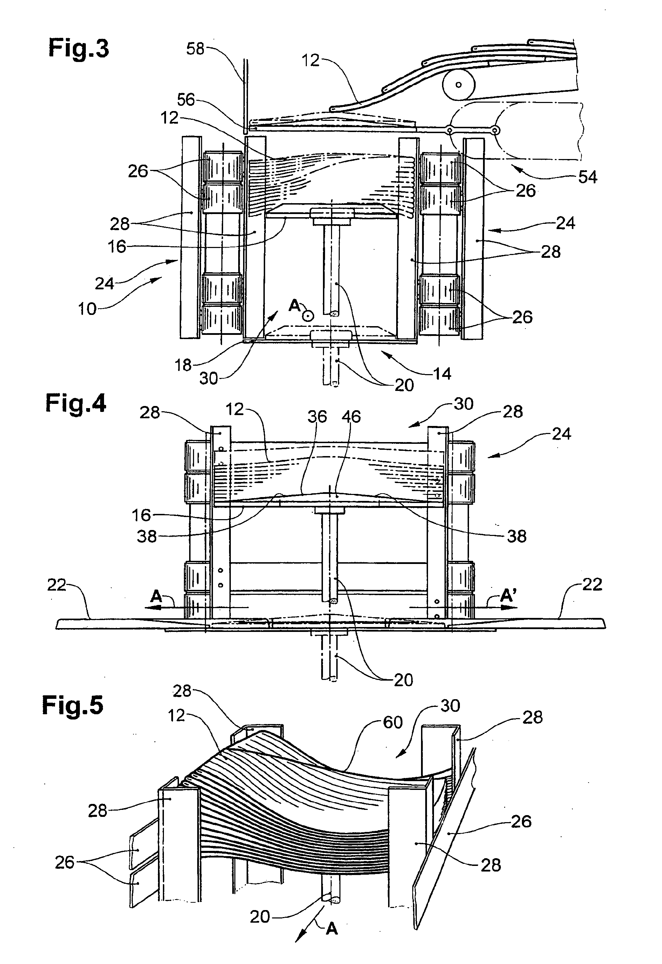

- Fig. 3: in einer Vorderansicht die in Fig. 1 gezeigte Stapelvorrichtung, bei der oberhalb eines Stapelschachts die Druckereiprodukte in einer Schuppenformation einer Teilstapelvorrichtung zugeführt werden und die Drehhubtischplatte mit aufliegenden Druckereiprodukten in einer erhöhten Hubposition (durchgezogene Linie) und in einer unteren Grundposition (strichpunktierte Linien) dargestellt ist;
- Fig. 4: in einer Seitenansicht einen Teil der in Fig. 1 und Fig. 3 gezeigten Stapelvorrichtung, wobei die Drehhubtischplatte wiederum in einer erhöhten Hubposition mit aufliegenden Druckereiprodukten (durchgezogene Linien) und unbeladen in einer unteren Grundposition (gestrichelte Linien) dargestellt ist; und
- Fig. 5: in einer perspektivischen Darstellung einen oberen Bereich des Stapelschachts, der mit einem Teilstapel von Druckereiprodukten, die auf der erfindungsgemässen Drehhubtischplatte aufliegen, gefüllt ist und wobei sich die Druckereiprodukte nahezu der Wölbung der darunter liegenden Drehhubtischplatte angepasst haben.

Die in Fig. 1 gezeigte erfindungsgemässe Stapelvorrichtung 10 für flächige Gegenstände, insbesondere für Druckereiprodukte 12, wie Zeitschriften, Zeitungen, Papierlagen usw., weist einen erfindungsgemässen Drehhubtisch 14 mit einer Drehhubtischplatte 16 auf, die zur Ablage von Druckereiprodukten 12 vorbestimmt ist. Die Drehhubtischplatte 16 ist heb- und senkbar oberhalb einer ebenen Grundplatte 18 angeordnet und zentral auf einem in Fig. 1 gestrichelt gezeichneten Drehhubzylinder 20 gelagert. Der Drehhubzylinder 20 ist Teil eines Hubmittels, das vorzugsweise elektrisch, hydraulisch oder pneumatisch betrieben wird.

Beiderseits von kürzeren, sich gegenüberliegenden Breitseiten 21 der Drehhubtischplatte 16 ist jeweils ein Hilfstisch 22 angeordnet. Die Hilfstische 22 verlängern die Drehhubtischplatte 16 und definieren zusammen mit zwei an sich gegenüberliegenden Längsseiten 23 der Drehhubtischplatte 16 angeordneten Ausstossvorrichtungen 24 zwei Ausstossrichtungen A und A'. Das Ausstossen der Druckereiprodukte ist in beide Ausstossrichtungen A bzw. A' möglich, das heisst, sowohl die Ausstossrichtung A, wie auch die Ausstossrichtung A', ist frei wählbar.

Die Ausstossvorrichtungen 24 sind detailliert beispielsweise in der EP-A-1445224 beschrieben. Sie sind mit an Transportmitteln 26 befestigten Ausstossmitteln in Form von Winkelprofilen 28 ausgestattet. Die Winkelprofile 28 definieren einen Stapelschacht 30, der unten durch die Drehhubtischplatte 16 begrenzt ist und innerhalb dessen durch Zufuhr von Druckereiprodukten 12 Stapel gebildet werden. Zum Ausstossen der dann in einem Stapel angeordneten Druckereiprodukte 12 werden die Winkelprofile 28 in die Ausstossrichtung A oder A' bewegt und die Stapel über einen zugeordneten Hilfstisch 22 zu einer nicht gezeigten Abtransportvorrichtung, beispielsweise einem Förderband oder einer Rollenbahn, geschoben.

Fig. 1 ist zu entnehmen, dass die Drehhubtischplatte 16 in einer Draufsicht im Wesentlichen H-förmig ausgebildet ist. An den Breitseiten 21 ist sie jeweils mit rechteckförmigen Maulausnehmungen 32, die in bzw. entgegen der Ausstossrichtung A bzw. A' hin offen sind, versehen. In einer unteren Grundstellung der Drehhubtischplatte 16 greifen in die Maulausnehmungen 32 jeweils zungenartige Rampenelemente 34 der zugeordneten Hilfstische 22 ein.

In der perspektivischen Darstellung von Fig. 2 ist die erfindungsgemässe Ausgestaltung der Drehhubtischplatte 16 und der zugeordneten Hilfstische 22 besonders gut sichtbar. Die Drehhubtischplatte 16 weist eine konvex nach oben gewölbte Auflagefläche 36 auf, die im Wesentlichen durch zwei, wenigstens nahezu ebene Auflageflächenelemente 38 gebildet wird. Die aufgrund der Maulausnehmungen 32 im Wesentlichen U-förmigen Auflageflächenelemente 38 sind spiegelsymmetrisch zueinander ausgeformt und stehen winklig, unter Bildung der im Wesentlichen satteldachartigen Auflagefläche 36 zueinander. Auf den Auflageflächenelementen 38 errichtbare Flächennormalen schliessen einen Winkel zwischen 5 und 20°, vorzugsweise von 15° ein.

Der oberste Bereich der Auflagefläche 36 bildet einen so genannten Firstbereich 40. Da die Längsausdehnung des Firstbereiches 40 nahezu rechtwinklig zur Ausstossrichtung A bzw. A' verläuft, wird er auch als Querfirstbereich 42 bezeichnet. In der gezeigten Ausführungsform ist der Querfirstbereich 42 abgeflacht. Alternativ kann er beispielsweise auch abgerundet oder eine Kante bildend ausgeformt sein.

Spiegelsymmetrisch bezüglich der Ausstossrichtung A ist die Drehhubtischplatte 16 an den Längsseiten 23 mit im Wesentlichen dreiecksförmigen weiteren Auflageflächensegmenten 46 ausgestattet. Die Auflageflächenelemente 38 und die weiteren Auflageflächensegmente 46 formen gemeinsam eine spezifische Ausführung einer satteldachförmigen Auflagefläche 36, namentlich eine walmdachartige Auflagefläche 36 aus.

Die weiteren Auflageflächensegmente 46 sind derart zueinander abgewinkelt angeordnet, dass auf ihnen errichtete Flächennormalen Winkel zwischen 50 und 90°, vorzugsweise von 75° einschliessen. Alternativ ist es auch denkbar, gänzlich auf die weiteren Auflageflächensegmente 46 zu verzichten, wodurch dann eine rein satteldachartige Auflagefläche 36 verbleiben würde. Die nahezu gleich grossen, weiteren Auflagenflächensegmente 46 bilden im Wesentlichen gleichschenklige Dreiecke, deren untere Segmentkanten 48 Teile der Längsseiten 23 bilden und die parallel zur Ausstossrichtung A bzw. A' verlaufen. Ihre den unteren Segmentkanten 48 gegenüberliegenden Ecken begrenzen den Querfirstbereich 42 in seiner Querausdehnung.

In Fig. 2 ist die Drehhubtischplatte 16 mittels strichpunktierter Linien auch in einer erhöhten Hubposition gezeigt. In dieser Hubposition stehen die beiden zugeordneten Hilfstische 22 nicht mehr über ihre zungenartigen Rampenelemente 34 im Eingriff mit den Maulausnehmungen 32.

Die Hilfstische 22 können sowohl fest auf der Grundplatte 18 und folglich bei einer Drehung des Drehhubtisches 14 mitdrehend, als auch stationär bezüglich des Drehhubtisches 14, also nicht mitdrehend, angeordnet sein. Im letztgenannten Fall muss vor einer Drehung der Drehhubtischplatte 16 diese zunächst angehoben werden bis die zungenartigen Rampenelemente 34 nicht mehr im Eingriff mit den Maulausnehmungen 32 stehen.

Die Hilfstische 22 sind mit einer podestartigen Erhöhung 50, die durch ein oberes, im Wesentlichen waagrecht verlaufendes Auflageflächenelement 38' und seitlichen, dazu abgewinkelt verlaufenden weiteren Auflageflächenelementen 46' gebildet wird, ausgestattet. Das obere Auflageflächenelement 38' umfasst zusätzlich die Oberfläche des zungenartigen Rampenelements 34. Die Höhe der podestartigen Erhöhung 50 ist dabei so gewählt, dass in der unteren Grundstellung der Drehhubtischplatte 16, in welcher die Druckereiprodukte 12 aus dem Stapelschacht 30 und somit von der Drehhubtischplatte 16 heruntergeschoben werden können, geringer ist als die Höhe des Querfirstbereichs 42. Auf diese Weise können die Druckereiprodukte 12 beim Ausstossen über die Oberfläche des zungenartigen Rampenelementes 34 auf das obere Auflageflächenelement 38' aufgleiten.

Die Hilfstische 22 sind über Bohrungen, von denen in Fig. 2 Senkbohrungen 52 sichtbar sind, am Drehhubtisch 14 oder einem stationären Halteelement befestigt.

Bei der besonders bevorzugten Ausführungsform, wie sie in Fig. 1 und Fig. 2 gezeigt ist, sind jeweils beidseitig an den Breitseiten 21 der Drehhubtischplatte 16 Hilfstische 22 angeordnet. Diese verlängern die Drehhubtischplatte 16 bis zu der nachgeordneten (nicht gezeigten) Abtransportvorrichtung, mittels derer die Druckereiprodukte 12 bzw. Stapel von Druckereiprodukten 12 dann abtransportiert werden. Alternativ kann der Drehhubtisch 14 auch nur mit einem oder keinem Hilfstisch 22 ausgestattet sein. Die Ausführungsform mit zwei Hilfstischen 22 ist besonders vorteilhaft, wenn die Druckereiprodukte 12 unabhängig von der Drehstellung der Drehhubtischplatte 16 über Hilfstische 22 sowohl in als auch entgegen der Ausstossrichtung A bzw. A' auf nur eine Abtransportvorrichtung aufgeschoben werden können.

In Fig. 3 ist die erfindungsgemässe Stapelvorrichtung 10 mit dem erfindungsgemässen Drehhubtisch 14 in einer Vorderansicht mit Blick entgegen der Ausstossrichtung A dargestellt. Wie bereits erwähnt, ist der Stapelschacht 30 seitlich jeweils von Winkelprofilen 28, die an Transportmitteln 26 der Ausstossvorrichtung 24 befestigt sind, und unten durch die Drehhubtischplatte 16 begrenzt. Die Drehhubtischplatte 16 befindet sich in einer erhöhten Hubposition (durchgezogene Linien) und ist bereits mit einem Teilstapel von Druckereiprodukten 12 beladen. Die Drehhubtischplatte 16 in ihrer unteren Grundposition ist durch strichpunktierte Linien angedeutet.

Oberhalb des Stapelschachts 30 ist eine Teilstapelvorrichtung 54 angeordnet. Die Teilstapelvorrichtung 54 ist mit einem vorzugsweise gabel- oder schieberartigen Zwischenboden 56 ausgestattet, auf dem zunächst eine vorher bestimmte Anzahl von Druckereiprodukten 12 zur Bildung eines Teilstapels gelangen. Die Druckereiprodukte 12 werden dazu von einer Zufuhrtransportvorrichtung, beispielsweise einem Förderband, vorzugsweise in einer Schuppenformation dem Zwischenboden 56 von oben zugeführt. Die korrekte Ablageposition der Druckereiprodukte 12 auf dem Zwischenboden 56 wird durch einen oberhalb des Stapelschachts 30 angeordneten Anschlag 58 sichergestellt.

Ist die vorbestimmte Anzahl von Druckereiprodukten 12 zur Bildung eines Teilstapels erreicht, so wird der Zwischenboden 56 derart zwischen zwei Winkelprofilen 28 hindurchgeführt, dass die Druckereiprodukte 12 des Teilstapels an den Winkelprofilen 28 abgestreift werden und im Stapelschacht 30 auf die Drehhubtischplatte 16 bzw. auf einen bereits dort aufliegenden Teilstapel fallen.

Vorzugsweise nach jedem Beladen der Drehhubtischplatte 16 mit einem weiteren Teilstapel von Druckereiprodukten 12 wird der Drehhubtischplatte 16, wie vorgängig beschrieben, um 180° gedreht, so dass jeweils falzseitige Bereiche von Druckereiprodukten 12 des neu zugeführten Teilstapels oberhalb von offenen Seitenkanten von Druckereiprodukten 12 des bereits vorhandenen, darunter liegenden Teilstapels zu liegen kommen.

Wie in Fig. 4 gezeigt, nehmen die Druckereiprodukte 12, wenn sie auf der Drehhubtischplatte 16 aufliegen, im Wesentlichen die Form der konvex nach oben gewölbten Auflagefläche 36 an. Sie werden dabei einerseits zentriert und andererseits in ihrer Stapelform stabilisiert. In Fig. 5 ist eine perspektivische Darstellung des Stapelschachts 30 mit bereits einem auf der Drehhubtischplatte 16 aufliegenden Teilstapel dargestellt. Durch die walmdachartige Ausformung der Auflagefläche 36 erhalten auch die Druckereiprodukte 12 eine der Auflagefläche 36 zumindest ähnliche Profilierung.

Durch den Querfirstbereich 42 wird die Ausformung einer obere Querwölbungskante 60 bei den Druckereiprodukten 12 bedingt. Von ihrer Querwölbungskante 60 breiten sich die Druckereiprodukte 12 beidseitig flügelartig-geschwungen aus. Da die Druckereiprodukte 12 falzseitig durch ihr Faltungsprofil bereits eine grössere Formstabilität im Vergleich zu den gegenüberliegenden freien Seitenkanten besitzen, erfahren die auf der Drehhubtischplatte 16 aufliegende Druckereiprodukte 12 falzseitig eine geringere Querwölbung.

Durch die dreidimensionale Profilierung der Druckereiprodukte 12 mit einer Querwölbungskante 60 wird die Stabilität der Stapel erhöht, so dass diese unter geringeren bzw. besser kontrollierten Formveränderungen aus dem Stapelschacht 30 hinausgeschoben werden können.

Beim Ausstossen bzw. Ausschieben des Stapels ist die Überwindung des Querfirstbereiches 42 aufgrund der moderaten Neigung der Auflageflächen 36 und der erhöhten Stabilität der profilierten Stapel problemlos möglich.

Sobald die Stapel dann von der Drehhubtischplatte 16 auf einen der Hilfstische 22 gelangen, wird durch das Aufgleiten auf das zungenartige Rampenelement 34 bzw. das gesamte obere Auflageflächenelement 38' der podestartigen Erhöhung 50 den Druckereiprodukten 12 anstatt der Querwölbungskante 60 nun eine in die Ausstossrichtung A bzw. A' verlaufende Längswölbungskante aufgezwungen.

## Patentansprüche

1. Drehhubtisch mit einer Drehhubtischplatte (16) zur Auflage von flächigen Gegenständen, insbesondere Druckereiprodukten (12), aufweisend eine gewölbte Auflagefläche (36), die durch wenigstens ein Auflageflächenelement (38) gebildet wird und von welcher die flächigen Gegenstände in einer Ausstossrichtung (A, A') abtransportiert werden können, **dadurch gekennzeichnet, dass** die Auflagefläche (36) konvex nach oben gewölbt ist und einen als Querfirstbereich (42) bezeichneten Firstbereich (40) aufweist, dessen Längsausdehnung wenigstens nahezu rechtwinklig zur Ausstossrichtung (A, A') verläuft.

2. Drehhubtisch nach Anspruch 1, **dadurch gekennzeichnet, dass** zwei zueinander abgewinkelte, vorzugsweise im Wesentlichen ebene Auflageflächenelemente (38) eine satteldachartige Auflagefläche (36) formen, deren Dachfirst den Querfirstbereich (42) bildet.

3. Drehhubtisch nach Anspruch 2, **dadurch gekennzeichnet, dass** Flächennormalen auf den zueinander abgewinkelten Auflageflächenelementen (38) einen Winkel zwischen 5° und 20°, vorzugsweise von 15° einschliessen.

4. Drehhubtisch nach Anspruch 2 oder 3, **dadurch gekennzeichnet, dass** zusätzlich seitlich aussen, im Wesentlichen parallel zur Ausstossrichtung (A, A') verlaufend zwei im Wesentlichen dreiecksförmige weitere Auflageflächensegmente (46) zur Bildung einer gesamthaft im Wesentlichen walmdachartigen Auflagefläche (36) ausgeformt sind, wobei die weiteren Auflagenflächenelemente (46) vorzugsweise gleich grosse, im Wesentlichen gleichschenklige Dreiecke bilden, ihre jeweils unteren Segmentkanten (48) im Wesentlichen parallel zur Ausstossrichtung (A, A') verlaufen und ihre den unteren Segmentkanten (48) gegenüberliegenden Ecken den Querfirstbereich (42) beidseitig begrenzen.

5. Drehhubtisch nach Anspruch 4, **dadurch gekennzeichnet, dass** Flächennormalen auf den zueinander abgewinkelten weiteren Auflageflächenelementen (46) einen Winkel zwischen 50° und 90°, vorzugsweise von 75° einschliessen.

6. Drehhubtisch nach einem der Ansprüche 2 bis 5, **dadurch gekennzeichnet, dass** der Querfirstbereich (42) abgeflacht, abgerundet oder eine Kante bildend ausgeformt ist.

7. Drehhubtisch nach einem der Ansprüche 1 bis 6, **dadurch gekennzeichnet, dass** die Drehhubtischplatte (16) eine äussere, in einer Draufsicht vorzugsweise wenigstens nahezu rechteckförmige Maulausnehmung (32) aufweist, die in die Ausstossrichtung (A, A') hin offen ist und ein zungenartiges Rampenelement (34) eines zugeordneten Hilfstisches (22) aufnehmen kann.

8. Drehhubtisch nach Anspruch 7, **dadurch gekennzeichnet, dass** der Hilfstisch (22) eine podestartige Erhöhung (50) mit einem vorzugsweise ebenen, oberen Auflageflächenelement (38') und seitlichen, zum oberen Auflageflächenelement (38') geneigt verlaufenden weiteren Auflageflächenelementen (46') aufweist, wobei sich das obere Auflageflächenelement (38') bei einem Ausstossen der flächigen Gegenstände wenigstens nahezu waagerecht auf einer Höhe unterhalb des Querfirstbereichs (42) der Drehhubtischplatte (16) erstreckt.

9. Drehhubtisch nach Anspruch 7 oder 8, **dadurch gekennzeichnet, dass** der Hilfstisch (22) bezüglich der Drehhubtischplatte (16) mitdrehend oder stationär angeordnet ist.

10. Vorrichtung zum Bilden von Stapeln aus flächigen Gegenständen, insbesondere von Druckereiprodukten (12), mit einem Stapelschacht (30), der unten von der Drehhubtischplatte (16) eines Drehhubtischs (14) nach einem der Ansprüche 1 bis 9 begrenzt ist, weiterhin aufweisend Drehmittel zum Drehen des Drehhubtisches (14), Hubmittel zum Heben und Senken des Drehhubtisches (14), Ausstossmittel zum Ausstossen der flächigen Gegenstände aus dem Stapelschacht (30) in die Ausstossrichtung und vorzugsweise eine oberhalb des Stapelschachts (30) angeordnete Teilstapelvorrichtung (54), welche dazu bestimmt ist, Teilstapel von flächigen Gegenständen zu bilden und diese Teilstapel in den Stapelschacht (30) zu entleeren.

## Claims

1. A rotary lift table with a rotary lift table board (16) for bearing flat objects, in particular print products (12), having an arched bearing surface (36) which is formed by at least one bearing surface element (38) and from which the flat objects can be removed in a discharge direction (A, A'), wherein the bearing surface (36) is pulvinated towards the top and has a ridge region (40) referred to as the transverse ridge region (42) whose longitudinal extension runs at least approximately at a right angle to the discharge direction (A, A').

2. The rotary lift table as claimed in claim 1, wherein two preferably essentially planar bearing surface elements (38) at an angle to one another form a gable roof-like bearing surface (36) whose roof ridge forms the transverse ridge region (42).

3. The rotary lift table as claimed in claim 2, wherein surface normals on the bearing surface elements (38) at an angle to one another enclose an angle between 5° and 20°, preferably of 15°.

4. The rotary lift table as claimed in claim 2 or 3, wherein two essentially triangular further bearing surface segments (46) are formed additionally on the lateral outside and running essentially parallel to the discharge direction (A, A') in order to form a bearing surface (36) which is essentially hipped roof-like in its entirety, wherein the further bearing surface elements (46) form essentially isosceles triangles of preferably equal size, their lower segment edges (48) respectively run essentially parallel to the discharge direction (A, A') and their corners opposite the lower segment edges (48) delimit the transverse ridge region (42) on both sides.

5. The rotary lift table as claimed in claim 4, wherein surface normals on the further bearing surface elements (46) at an angle to one another enclose an angle between 50° and 90°, preferably of 75°.

6. The rotary lift table as claimed in one of claims 2 to 5, wherein the transverse ridge region (42) is flattened, is rounded or forms an edge.

7. The rotary lift table as claimed in one of claims 1 to 6, wherein the rotary lift table board (16) has an outer jaw recess (32) which is preferably at least approximately rectangular in a top view, is open in the discharge direction (A, A') and can receive a tongue-like ramp element (34) of an assigned auxiliary table (22).

8. The rotary lift table as claimed in claim 7, wherein the auxiliary table (22) has a platform-like elevation (50) with a preferably planar, upper bearing surface element (38') and further lateral bearing surface elements (46') running at an angle to the upper bearing surface element (38'), wherein the upper bearing surface element (38') extends at least approximately horizontally at a height below the transverse ridge region (42) of the rotary lift table board (16) during a discharge of the flat objects.

9. The rotary lift table as claimed in claim 7 or 8, wherein the auxiliary table (22) is arranged co-rotating or stationary in relation to the rotary lift table board (16).

10. A device for forming stacks of flat objects, in particular of print products (12), with a stacking shaft (30) which is delimited at the bottom by the rotary lift table board (16) of a rotary lift table (14) as claimed in one of claims 1 to 9, further having rotary means for rotating the rotary lift table (14), lifting means for lifting and lowering the rotary lift table (14), discharge means for discharging the flat objects from the stacking shaft (30) in the discharge direction and preferably a partial stacking device (54) arranged above the stacking shaft (30), said partial stacking device (54) being intended to form partial stacks of flat objects and discharge these partial stacks into the stacking shaft (30).

## Revendications

1. Table élévatrice rotative comprenant un plateau de table élévatrice rotative (16) pour supporter des objets plats, en particulier des produits d'imprimerie (12), présentant une surface d'appui cintrée (36) qui est formée par au moins un élément de surface d'appui (38) et depuis laquelle les objets plats peuvent être emportés dans une direction d'éjection (A, A'), **caractérisée en ce que** la surface d'appui (36) est cintrée de manière convexe vers le haut et présente une région de faîte (40) désignée par région de faîte transversale (42), dont l'étendue longitudinale est au moins approximativement perpendiculaire à la direction d'éjection (A, A').

2. Table élévatrice rotative selon la revendication 1, **caractérisée en ce que** deux éléments de surface d'appui de préférence essentiellement plans (38) coudés l'un par rapport à l'autre forment une surface d'appui (36) en forme de toit à double pente dont le faîte forme la région de faîte transversale (42).

3. Table élévatrice rotative selon la revendication 2, **caractérisée en ce que** des normales à la surface forment sur les éléments de surface d'appui (38) coudés l'un par rapport à l'autre un angle compris entre 5° et 20°, de préférence de 15°.

4. Table élévatrice rotative selon la revendication 2 ou 3, **caractérisée en ce que** de plus deux segments de surface d'appui supplémentaires essentiellement triangulaires (46) sont formés latéralement à l'extérieur en s'étendant essentiellement parallèlement à la direction d'éjection (A, A') pour former une surface d'appui (36) dans l'ensemble essentiellement en forme de toit en coupe, les éléments de surface d'appui supplémentaires (46) formant de préférence des triangles de même taille, essentiellement isocèles, leurs arêtes de segments inférieures respectives (48) s'étendant essentiellement parallèlement à la direction d'éjection (A, A') et leurs coins opposés aux arêtes de segments inférieures (48) limitant des deux côtés la région de faîte transversale (42).

5. Table élévatrice rotative selon la revendication 4, **caractérisée en ce que** des normales à la surface sur les éléments de surface d'appui (46) supplémentaires coudés l'un par rapport à l'autre forment un angle compris entre 50° et 90°, de préférence de 75°.

6. Table élévatrice rotative selon l'une quelconque des revendications 2 à 5, **caractérisée en ce que** la région de faîte transversale (42) est aplatie, arrondie ou formée en formant une arête.

7. Table élévatrice rotative selon l'une quelconque des revendications 1 à 6, **caractérisée en ce que** le plateau de table élévatrice rotative (16) présente un évidement de mâchoire extérieur (32) de préférence au moins pratiquement rectangulaire en vue de dessus, qui est ouvert dans la direction d'éjection (A, A') et qui peut recevoir un élément en rampe de type langue (34) d'une table auxiliaire associée (22).

8. Table élévatrice rotative selon la revendication 7, **caractérisée en ce que** la table auxiliaire (22) présente un rehaussement sous forme de plate-forme (50) avec un élément de surface d'appui supérieur de préférence plan (38') et des éléments de surface d'appui supplémentaires latéraux (46') s'étendant de manière inclinée par rapport à l'élément de surface d'appui supérieur (38'), l'élément de surface d'appui supérieur (38'), lors d'une éjection des objets plats, s'étendant au moins approximativement horizontalement à une hauteur en dessous de la région de faîte transversale (42) du plateau de table élévatrice rotative (16).

9. Table élévatrice rotative selon la revendication 7 ou 8, **caractérisée en ce que** la table auxiliaire (22) est disposée de manière stationnaire ou de manière à tourner par rapport au plateau de table élévatrice rotative (16).

10. Dispositif pour la formation de piles d'objets plats, en particulier de produits d'imprimerie (12), comprenant une cage d'empilement (30) qui est limitée en bas par le plateau de table élévatrice rotative (16) d'une table élévatrice rotative (14) selon l'une quelconque des revendications 1 à 9, présentant en outre des moyens rotatifs pour faire tourner la table élévatrice rotative (14), des moyens de levage pour soulever et abaisser la table élévatrice rotative (14), des moyens d'éjection pour éjecter les objets plats de la cage d'empilement (30) dans la direction d'éjection et de préférence un dispositif d'empilement partiel (54) disposé au-dessus de la cage d'empilement (30), lequel est prévu pour former des piles partielles d'objets plats et pour vider ces piles partielles dans la cage d'empilement (30).
